# EUROPEAN PATENT APPLICATION

(11) **EP 2 879 045 A1**
(43) Date of publication of application: **03.06.2015**
(21) Application number: 14275073.6
(22) Date of filing: 17.03.2014
(51) Int. Cl.: G06F 3/14, G06Q 30/02

(54) **Electronic tag cabinet and method of operating els system using the same**

(30) Priority: 02.12.2013 KR 20130148565
(71) Applicant: Samsung Electro-Mechanics Co., Ltd., Suwon-Si, Gyeonggi-Do 443-743 (KR)
(72) Inventor: Lee, Jae Chan, 443-743 Gyeonggi-Do (KR)
(74) Representative: Potter Clarkson LLP

(57) **Abstract**

Disclosed herein are an electronic tag cabinet and a method of operating an ESL system using the same, wherein an unassigning operation is automatically performed on an electronic tag used in an electronic shelf label (ESL) as soon as the electronic tag is stored.

## Description

### CROSS REFERENCE(S) TO RELATED APPLICATIONS

This application claims the foreign priority benefit of Korean Patent Application Serial No. 10-2013-0148565, entitled "Electronic Tag Cabinet and Method of Operating ELS System Using the Same" filed on December 2, 2013, which is hereby incorporated by reference in its entirety into this application.

### BACKGROUND OF THE INVENTION

### 1. Technical Field

The present invention relates to an electronic tag cabinet that stores an electronic tag used in an electronic shelf label (ESL), and a method of operating an ELS system using the same.

### 2. Description of the Related Art

In general, in large and medium stores, paper with prices printed thereon is attached to display shelves or display stands filled with products to guide prices of goods or articles. This method, however, involves inconvenience of printing prices on paper and attaching the same to the display shelves each time prices are changed. Thus, as a solution to this problem, recently, an electronic shelf label (ELS) system has been widely used.

A basic configuration of the ELS system may include a central server that manages and controls an overall system and stores product information, an electronic tag (or an ESL tag) which is installed in a shelf of a display stand to label (or provide) product information, and a coordinator that delivers communication between the server and the electronic tag. Before the use, an operator performs an assigning process to synchronize a product on display and electronic tags providing product information by using a personal digital assistant (PDA) (Korean Patent Laid-Open Publication No. 10-2011-0056998).

When the use of the electronic tag is finished, the user performs an unassigning process to deactivate the electronic tag registered to a server and the product information synchronized to the corresponding electronic tag by using the PDA. Namely, when the operator, while going around in a store, scans a medium access control (MAC) address of a finished electronic tag through the PDA and transmits the same to the server, the server deletes product information synchronized with the corresponding electronic tag from a database thereof with the received MAC address. The operator removes the electronic tag completed with the unassigning process (i.e., the electronic tag which has completely undergone the unassigning process) from the shelf and stores it in a predetermined box.

However, while the process is very simple, the operator may remove an electronic tag from the shelf inertially (or habitually) without scanning a MAG address thereof. As a result, the electronic tag, which has not undergone unassign registration, continuously attempts to communicate with the coordinator, and communication failure with the coordinator results in a signal lost state to cause the electronic tag to be discharged. In addition, the server cannot update (i.e., delete or change) a corresponding price, encountering a price reception error, and this leads to a degradation of reliability of products of a company, regardless of product quality.

### [Related art]

(Patent document 1) Korean Patent Laid-Open Publication No. 10-2011-0056998

### SUMMARY OF THE INVENTION

An object of the present invention is to provide an electronic tag cabinet and a method of operating an electronic shelf label (ESL) system using the same, wherein an unassigning operation is automatically performed on an electronic tag immediately when the electronic tag is stored, thus providing operator convenience in electronic tag management.

According to an exemplary embodiment of the present invention, there is provided an electronic tag cabinet storing an electronic tag, including: an unassigning device installed within the electronic tag cabinet, reading out medium access control (MAC) address of an electronic tag introduced to the interior of the electronic tag cabinet, and transmitting the read MAC address to a server.

The unassigning device may read out the MAC address of the electronic tag introduced to the interior of the electronic tag cabinet through a wireless communication module.

The wireless communication module may include any one or two or more of near-field communication (NFC), WiFi direct, Bluetooth™, and ZigBee™.

The unassigning device may transmit the MAC address of the electronic tag to the server through a wired/or wireless communication network.

According to an exemplary embodiment of the present invention, there is also provided an electronic tag cabinet including: a transfer rail transferring an electronic tag introduced to the interior thereof through an inlet; and a storage box connected to an outlet and storing the electronic tag transferred by the transfer rail, wherein the transfer rail includes an unassigning device installed therein to read a MAC address of the electronic tag being transferred and transmit the read MAC address to a server.

The transfer rail may be installed to be sloped.

The electronic tag cabinet may further include: a conveyer belt allowing the electronic tag in the storage box to be loaded thereon and discharged to the outside through the outlet.

The conveyer belt may be manually operated by an operator.

The conveyer belt may have protrusions formed on a surface thereof at every section corresponding to a size of the electronic tag.

According to an exemplary embodiment of the present invention, there is also provided a method of operating an electronic shelf label (ESL) using the electronic tag cabinet as described above, including: introducing an electronic tag in an assign state to the interior of the electronic tag cabinet; reading a MAC address of the introduced electronic tag through the unassigning device; transmitting an unassign request signal including the MAC address of the electronic tag to a server; performing, by the server receiving the uassign request signal, an unassign registration on the corresponding electronic tag and transmitting a product information delete request signal; and deleting, by the electronic tag receiving the product information delete request signal, product information stored in the electronic tag.

In the transmitting of the unassign request signal to the server, an identification code may be added to the MAC address included in the unassign request signal.

In the transmitting of the product information delete request signal, the product information delete request signal may be transmitted after the identification code added to the MAC address is deleted.

### BRIEF DESCRIPTION OF THE DRAWINGS

FIG. 1 is a view illustrating a configuration of an electronic shelf label (ESL) system;
FIG. 2 is a view schematically illustrating the interior of an electronic tag cabinet according to an exemplary embodiment of the present invention;
FIG. 3 is a perspective view illustrating a storage box included in the interior of the electronic tag cabinet according to an exemplary embodiment of the present invention;
FIG. 4 is a perspective view illustrating a transfer rail included in the interior of the electronic tag cabinet according to an exemplary embodiment of the present invention; and
FIG. 5 is a flow chart illustrating a method of operating an ESL system using an electronic tag cabinet according to an exemplary embodiment of the present invention.

### DESCRIPTION OF THE PREFERRED EMBODIMENTS

Hereinafter, exemplary embodiments will be described in detail with reference to the accompanying drawings so that they can be easily practiced by those skilled in the art to which the present invention pertains.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

Therefore, the configurations described in the embodiments and drawings of the present invention are merely most preferable embodiments but do not represent all of the technical spirit of the present invention. Thus, the present invention should be construed as including all the changes, equivalents, and substitutions included in the spirit and scope of the present invention at the time of filing this application.

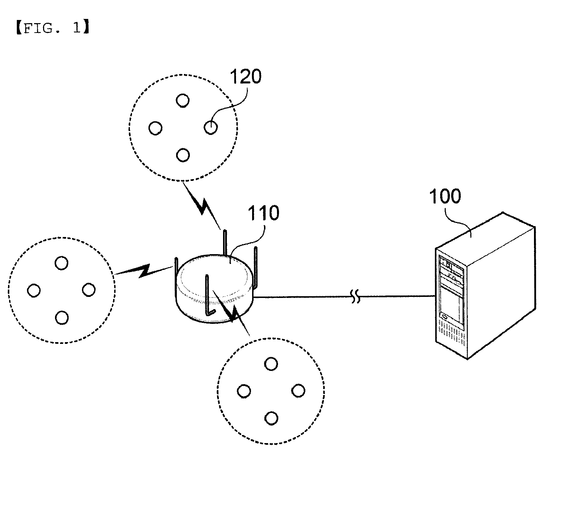

FIG. 1 is a view schematically illustrating a configuration of an electronic shelf label (ESL) system. Referring to FIG. 1, the ESL system may include a server 100, a plurality of electronic tags 120, and a coordinator 110 delivering communication between the server 100 and the electronic tags 120, as basic elements.

The present invention relates to an electronic tag cabinet that stores the electronic tags 120, after the use of the electronic tags 120 is terminated in the ESL system. More specifically, the present invention relates to an electronic tag cabinet in which an unassigning operation is performed between the server 100 and the electronic tags 120 registered to the server 100 as soon as the electronic tags 120 are stored. Thus, before describing the electronic tag cabinet, respective elements of the ESL system and an assigning operation performed before the unassigning operation will be first described.

First, the server 100 may include a database (DB) that stores and manages information related to products (i.e., goods or articles), for example, prices, expiration dates, manufactured dates, and the like, of products displayed in a store. Also, the server 100 serves to create a command message for performing various functions such as synchronization, updating, alteration, and the like, of product information labeled in each electronic tag 120, and transmit the created command message to the electronic tag 120 through the coordinator 110. The server 100 may interwork with a point of sale (POS) system, or the like, to obtain information related to purchase of goods in the store in real time.

The coordinator 110 serves to analyze data received from the server 100 to check whether there is a message or data to be delivered to the electronic tag 120 that communicates with the coordinator 110, and deliver a checked message or data to the corresponding electronic tag 120. For example, the coordinator 110 may be connected to the server 100 by a wired/wireless LAN and receive data including product information from the server 100 through communication based on a TCP/IP scheme. Also, in order to simultaneously transmit a data signal including product information to the plurality of electronic tags 120, the coordinator 110 may use a ZigBee type (i.e., IEEE 802.15.4) wireless communication scheme.

Each electronic tag 120 serves as a label attached to a display stand to provide product information in a store, and to this end, the electronic tag 120 may include a small display panel such as a black-and-white or color LCD, e-paper, or the like, and a communication module performing wireless communication with the coordinator 110.

In the ESL system composed of the foregoing devices, in order to perform a synchronization process, namely, an assigning operation, between product information stored in the DB of the server 100 and the electronic tag 120 to label the product information, an operator obtains information regarding products displayed in the shelf and the electronic tag 120 by using a PDA, or the like, and delivers the same to the server 100. Namely, the operator may obtain information identifying a product by scanning a barcode thereof through the PDA and obtain information identifying the electronic tag 120 by scanning a medium access control (MAC) address of the electronic tag 120 with respect to the product through the PDA.

When the operator delivers a product synchronization request message including the product identification information and the electronic tag identification information corresponding thereto to the server 100, the server 100 retrieves product information desired to be synchronized from the DB by using the product identification information included in the product synchronization request message. Subsequently, the server creates a tag synchronization request message including the searched product information and the electronic tag identification information included in the product synchronization request message and transmits the same to the coordinator 110, and the coordinator 110 transmits the tag synchronization request message to the electronic tag 120 having the corresponding electronic tag identification information (MAC address). Finally, the electronic tag 120 labels product information included in the tag synchronization request message, thus completing the synchronization process (assigning process) between the product and the electronic tag 120.

When the use of the electronic tag is terminated, an unassigning process, the reverse of the assigning process, is performed. In the related art, an operator, while going around in a store, scans a MAC address of the electronic tag 120 to perform an unassigning operation through a PDA and stores the electronic tag 120 completed with the unassigning operation in a predetermined box. In comparison, in the case in which the electronic tag 120 is stored by using an electronic tag cabinet according to an exemplary embodiment of the present invention, since an unassigning operation is automatically performed, without a scanning process, as soon as the electronic tag 120 is put into the electronic tag cabinet, and thus, the problem of the related art may be solved.

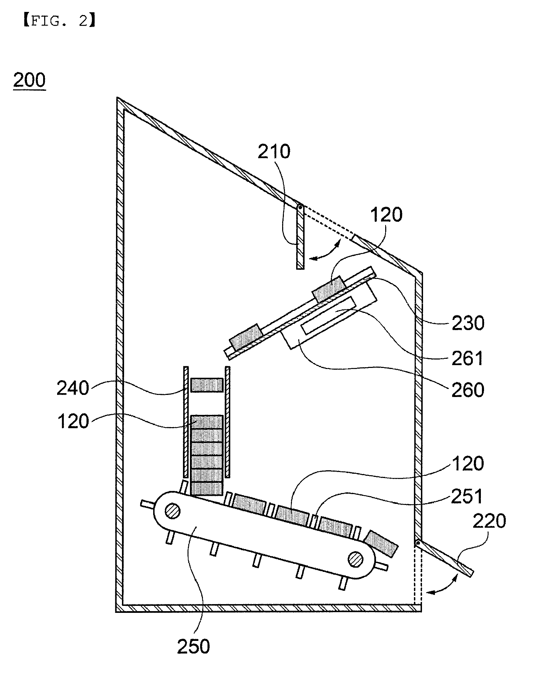

FIG. 2 is a view schematically illustrating the interior of an electronic tag cabinet according to an exemplary embodiment of the present invention. Hereinafter, the electronic tag cabinet according to an exemplary embodiment of the present invention will be described in detail with reference to FIG. 2.

The electronic tag cabinet 200 may have an inlet 210 allowing the used electronic tag 120 to be put into the electronic tag cabinet 200 therethrough and an outlet 220 allowing the electronic tag 120 stored for reuse thereof to be discharged therethrough. In FIG. 2, the inlet 210 and the outlet 220 are illustrated as having a hinged form, but the present disclosure is not limited thereto and any type of inlet and outlet may be used as long as the electronic tag 120 may be introduced or discharged therethrough.

The interior of the electronic tag cabinet 200 may include a transfer rail 230 transferring the electronic tag 120 put thereinto through the inlet 210 and a storage box 240 storing the electronic tag 120 transferred by the transfer rail 230. In addition, the electronic cabinet 220 may further include a conveyer belt 250 positioned between the storage box 240 and the outlet 220 and allowing the electronic tags 120 discharged from a lower portion of the storage box 240 to be loaded thereon in turn and transferred to the outlet 220.

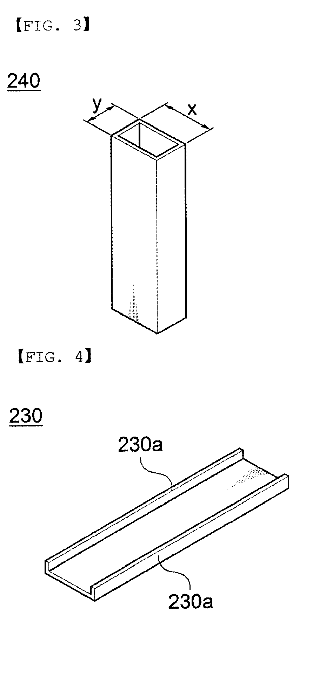

FIG. 3 is a perspective view illustrating the storage box 240. In FIG. 3, the storage box 240 has a square pillar shape with open upper and lower sides, and may be manufactured to have a horizontal size (x) and a vertical size (y) corresponding to those of the electronic tag 120.

Accordingly, the electronic tags 120 in the transfer rail 230 positioned above the storage box 240 are introduced to the storage box 240 in turn through an upper entrance of the storage box 240, and the electronic tags 120 stored in the storage box 240 may be loaded onto the conveyer belt 250 positioned below the storage box 240 through a lower exit of the storage box 240 in turn from a lower portion of the storage box 240.

FIG. 4 is a perspective view illustrating the transfer rail 230. Referring to FIG. 4, the transfer rail 230 is implemented as having a flat plate form, and has guide portions 230a provided in both edges thereof to prevent the electronic tag 120 from being removed from the transfer rail 230 when transferred.

The transfer rail 230 may be installed such that one end thereof is positioned directly below the inlet 210 and the other end thereof is placed on an upper portion of the storage box 240. Thus, as soon as the electronic tag 120 is introduced into the electronic tag cabinet 200, the electronic tag 120 is mounted on the transfer rail 230, and the transferred electronic tag 120 is put into the storage box 240.

In this case, in order to allow the electronic tag 120 mounted on the transfer rail 230 to slide naturally toward the storage box 240, the transfer rail 230 may be installed to be sloped at a predetermined angle. Here, the angle of the transfer rail 230 may vary according to a weight of the electronic tag 120.

An unassigning device 260 may be installed in the transfer rail 230 in order to read a MAC address of the electronic tag 120 being transferred and transmit the read MAC address to the server 100. For example, when the transfer rail 230 has a flat plate form, the unassigning device 260 may be installed on a bottom surface thereof.

Here, in order to obtain the MAC address of the electronic tag 120 without intervention of an operator, the unassigning device 260 may include a wireless communication module 261 composed of any one or two or more of near-field communication (NFC), WiFi-direct, Bluetooth™, and ZigBee™, for example.

As discussed above, the unassigning device 260 may be installed on the bottom surface of the transfer rail 230, and thus, the electronic tag 120 transferred on the transfer rail 230 is in the proximity of the unassigning device 260. In general, a communication module for wireless communication with the coordinator 110 is embedded in the electronic tag 120, and thus, for example, in a case in which the wireless communication module 261 is implemented as an NFC type module having a read function, the unassigning device 260 may read out the MAC address of the electronic tag 120 through a wireless channel formed the instant that the electronic tag 120 ant the wireless communication module 261 are in proximity to each other.

The unassigning device 260 and the server 100 positioned outside the electronic cabinet 200 are connected through a wired communication network such as a TCP/IP network or a wireless communication network such as Wi-Fi, ZigBee™, or the like. Thus, the unassigning device 260 may transfer the MAC address obtained from the wireless communication module 261 to the server 100.

Upon receiving the MAC address, the server 100 performs an unassigning operation by using the received MAC address. This will be described in detail in dealing with a method of operating an ESL system using the electronic tag cabinet 200 according to an exemplary embodiment of the present invention hereinbelow.

The conveyer belt 250 allows the electronic tags 120 to be loaded thereon and discharged one by one to the outside through the outlet 220. The conveyer belt 250 may be manually operated by the operator. Namely, a dial (not shown) may be provided to be connected to the conveyer belt 250 outside the electronic tag cabinet 200, and the operator may operate the conveyer belt 250 by rotating the dial as needed.

When the conveyer belt 250 is operated, the electronic tags 120 stored in the storage box 240 may be loaded on the conveyer belt 250 one by one from a lower portion of the storage box 240 and discharged to the outside through the outlet 220.

Here, in order to stably load the electronic tags 120, the conveyer belt 250 may have protrusions 251 formed on a surface thereof. The protrusions 251 may be formed at every predetermined sections, and thus, the electronic tag 120 placed in the lowest portion of the storage box 240 may be caught by the protrusion 251 and pushed out.

Hereinafter, a method of operating an ESL system using the electronic tag cabinet 200 according to an exemplary embodiment of the present invention, specifically, an unassigning operation of the electronic tag 120 introduced to the interior of the electronic tag cabinet 200, will be described.

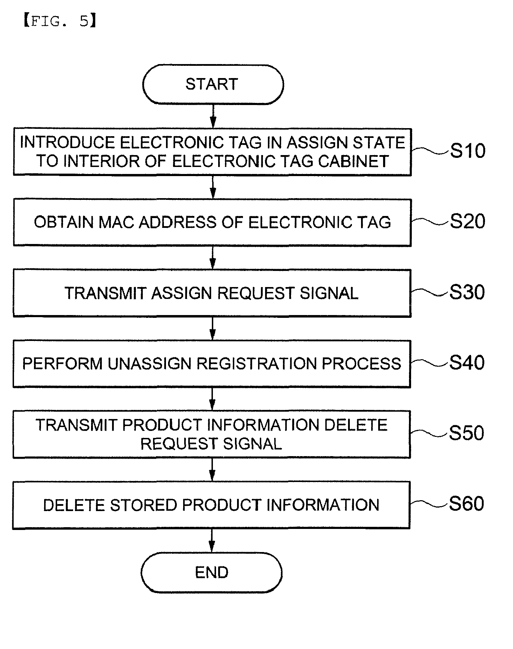

FIG. 5 is a flow chart illustrating a method of operating an ESL system using an electronic tag cabinet 200 according to an exemplary embodiment of the present invention. First, when the electronic tag 120, which has been completely used and is in an assign state, is put into the electronic tag cabinet 200 (S10), a MAC address of the electronic tag 120 is read (S20). This operation may be performed through the unassigning device 260, specifically, the wireless communication module 261 of the unassigning device 260, installed within the electronic tag cabinet 200.

Next, the unassigning device 260 transmits an unassign request signal including the obtained MAC address to the server 100 (S30).

As described above, the unassigning device 260 is connected to the server 100 through a wired/wireless communication network, so it may transmit the unassign request signal to the server 100 therethrough.

In this case, the unassigning device 260 may add an identification code to the MAC address to allow the server 100 to recognize the transmitted MAC address as a MAC address of the electronic tag 120 required for unassign registration. For example, when the MAC address of the electronic tag 120 is assumed to be "801020FFFE234DF2", the unassigning device 260 may transmit a new MAC address such as "801020FFFE234DF2+1" obtained by adding an identification code such as a number, a character, or the like, to the server 100.

Then, the server 100 recognizes the MAC address included in the received unassign request signal is a MAC address of the electronic tag 120 requesting unassign registration, and performs an unassign registration process (S40).

In the unassign registration process, an unassigning operation is performed on the electronic tag 120 having the received MAC address, among the plurality of electronic tags 120 registered to the DB of the server 100. Accordingly, product information synchronized with the corresponding electronic tag 120 through a previous assigning operation is deactivated and deleted from the DB.

Thereafter, the server 100 transmits a product information delete request signal for requesting deletion of the product information synchronized with the electronic tag 120 to the corresponding electronic tag 120 (S50). The product information delete request signal may include the MAC address of the unassign-registered electronic tag 120, and in this case, the identification code added in transmitting the unassign request signal may be deleted, so the product information delete request signal may be transmitted without the identification code.

When the electronic tag 120 receives the product information delete request signal, the product information stored therein is deleted (S60), and thereafter, when the electronic tag is required to be reused, the electronic tag 120 may be discharged from the electronic tag cabinet 200 through the outlet 220.

According to the exemplary embodiments of the present invention, when an electronic tag cabinet is used, an unassigning operation is automatically performed as soon as an electronic tag is put into the electronic tag cabinet, without performing a scanning process. Thus, a waste of power of an electronic tag due to an operator's mistake as in the related art and a degradation of product reliability may be prevented.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Accordingly, such modifications, additions and substitutions should also be understood to fall within the scope of the present invention.

## Claims

1. An electronic tag cabinet storing an electronic tag, the electronic tag cabinet comprising:
an unassigning device installed within the electronic tag cabinet, reading out a MAC address of an electronic tag introduced to the interior of the electronic tag cabinet, and transmitting the read MAC address to a server.

2. The electronic tag cabinet according to claim 1, wherein the unassigning device reads out the MAC address of the electronic tag introduced to the interior of the electronic tag cabinet through a wireless communication module.

3. The electronic tag cabinet according to claim 2, wherein the wireless communication module includes any one or two or more of near-field communication (NFC), WiFi direct, Bluetooth™, and ZigBee™.

4. The electronic tag cabinet according to claim 1, wherein the unassigning device transmits the MAC address of the electronic tag to the server through a wired/or wireless communication network.

5. An electronic tag cabinet comprising:
a transfer rail transferring an electronic tag introduced to the interior thereof through an inlet; and
a storage box connected to an outlet and storing the electronic tag transferred by the transfer rail,
wherein the transfer rail includes an unassigning device installed therein to read a MAC address of the electronic tag being transferred and transmit the read MAC address to a server.

6. The electronic tag cabinet according to claim 5, wherein the transfer rail is installed to be sloped.

7. The electronic tag cabinet according to claim 5, further comprising a conveyer belt allowing the electronic tag in the storage box to be loaded thereon and discharged to the outside through the outlet.

8. The electronic tag cabinet according to claim 7, wherein the conveyer belt is manually operated by an operator.

9. The electronic tag cabinet according to claim 7, wherein the conveyer belt has protrusions formed on a surface thereof.

10. A method of operating an electronic shelf label (ESL) using the electronic tag cabinet according to any one of claims 1 to 9, the method comprising:
introducing an electronic tag in an assign state to the interior of the electronic tag cabinet;
reading a MAC address of the introduced electronic tag through the unassigning device;
transmitting an unassign request signal including the MAC address of the electronic tag to a server;
performing, by the server receiving the uassign request signal, an unassign registration on the corresponding electronic tag and transmitting a product information delete request signal; and
deleting, by the electronic tag receiving the product information delete request signal, product information stored in the electronic tag.

11. The method according to claim 10, wherein, in the transmitting of the unassign request signal to the server, an identification code is added to the MAC address included in the unassign request signal.

12. The method according to claim 11, wherein, in the transmitting of the product information delete request signal, the product information delete request signal is transmitted after the identification code added to the MAC address is deleted.
